# EUROPEAN PATENT APPLICATION

(11) **EP 1 361 538 A1**
(43) Date of publication of application: **12.11.2003**
(21) Application number: 02010310.7
(22) Date of filing: 07.05.2002
(51) Int. Cl.: G06K 19/077

(54) **RFID transponders for labeling merchandise**

(71) Applicant: X-ident technology GmbH, 52355 Düren (DE)
(72) Inventor: Robertz, Bernd, Dr., 52428 Jülich (DE)
(74) Representative: Sternagel, Fleischer, Godemeyer & Partner Patentanwälte

(57) **Abstract**

This invention relates to RFID transponders that can be used as an identification or security means for labeling merchandise. The invention deals with reusable RFID transponders that can be detached from the merchandise after use without any loss of function.

The RFID transponders have a substrate as carrier for at least one antenna coil and a circuit chip in electrical connection thereto, characterized in that the surface tension of at least one surface of the substrate coating ranges from 15 to 50mN/M.

## Description

This invention relates to RFID transponders that can be used as an identification or security means for labeling merchandise. The invention deals with reusable RFID transponders that can be detached from the merchandise after use without any loss of function.

The use of labels as remotely readable identification tags for baggage is known. These labels comprise, for example, a flexible substrate on which an antenna is formed having a transponder circuit chip, and adhesive film for joining chip and antenna in the region of the antenna contacts and the chip contacts. Adhesive films are also between the transponder, the substrate and the protective sheet. A label of this kind is disclosed in EP-A-595 549.

From EP-A-704 816 an RFID transponder is known, having resonant antenna coils and circuit chips in electric connection thereto, positioned on one surface of a flexible dielectric substrate and formed, for example, from paper or flexible plastic. The transponder is provided with an adhesive layer on the reverse side of the substrate surface with the antenna coil, for fixing the transponder to an object to be identified. A peel-off protective sheet covers the adhesive layer.

US-A-5,294,290 refers to a mass production of flexible planar resonant circuits formed on a polymer sheet as support. The multi-layer laminate has sections which can be provided with optically readable information by printing the multi-layer laminate as a contact-adhesive layer covered by release paper. The object of the US patent is to lower the costs for using RF transponders-units for identification purposes in order to find new markets and applications.

The object of the present invention is to provide an RFID transponder which can temporarily be attached on merchandise and can be detached after use without any loss of function. Due to the fact that cost-intensive RFID transponders with for example a high capacity in memory can be reused, a variety of new applications is possible.

This object is achieved by an RFID transponder having a substrate as a carrier for at least one antenna coil and a circuit chip in electrical connection thereto with a surface tension of at least one surface of the RFID transponder of 15 to 50 mN m. Such an RFID transponder can be stuck as for instance an identification or security means onto a surface that is coated with an adhesive. This surface can be for example a label or tag which is directly connected to a merchandise. The connection is a secure connection from the RFID transponder to the merchandise in order to identify it. When this identification is no longer necessary, the RFID transponder can be removed from the surface without any loss of function. This is possible because the peel adhesion of the RFID transponder is not exceeding a value which might destroy the transponder.

In another embodiment the surface on that the inventive RFID transponder is stuck can be a transfer adhesive tape or a double sided adhesive tape. Such a composite can be used for labeling merchandise.

An RFID transponder, for example in form of a label, that is conventionally fixed to an article with a permanent adhesive will inevitably be destroyed when it is peeled off. A removable or repositionable adhesive, having a lower peel adhesion compared to a permanent adhesive, deposited on the RFID transponder is no alternative to the present invention. An RFID transponder fixed with said removable or repositionable glue to an article will loose its adhesive performance because of the inevitable absorption of dust, grease, etc. from the application surface when it is peeled off. Such a transponder cannot be reused for labeling merchandise in a secure manner. Anyway, the RFID transponder will loose its function, if the peel adhesion exceeds a value which destroys the same.

The substrate itself, that is the carrier for the RFID transponder of the present invention, may have on at least one surface a surface tension in the inventive range. If not, a surface tension according to the teaching of the present invention can be obtained by coating a surface tension modifying agent on said substrate.

The surface tension of the substrates is determined by methods know in the prior art. It is preferred to measure the surface tension with test inks according to DIN 53364 or ASTM D 2578-94.

The surface tension of at least one surface of the RFID transponder can be within the range of 15 to 40 mN m, preferably 16 to 37 mN m, most preferably 17 to 35 mN m, in a special embodiment 18 to 30 mN m and in a very special embodiment 18 to 27 mN m.

The adhesive used for fixing the inventive RFID transponder may have a peel adhesion that is adjusted to the surface tension of the said RFID transponder. In such an event a higher value of peel adhesion may result in a lower value of the surface tension of the surface of the RFID transponder that is contacted with the adhesive. The peel adhesion of an adhesive can be measured according to Finat Test Method 1 (FTM 1).

As a surface tension modifying agent, agents known as release agents may be used. These surface tension modifying agents can be release agents such as polymers, waxes, chromium stearate, polysiloxanes, and derivatives of polysiloxanes. The polymers used can be polymers that are known in the prior art to decrease the surface tension of surfaces, such as cellulose acetates, polyacrylates, polymethacrylates, polyacrylnitriles, polyvinylchlorides, polyvinylethers, or copolymers thereof. Such copolymers can be maleic anhydrides or resins of aldehyde or amine resins.

Waxes used to control the surface tension are, for instance, waxes on the basis of polyethylene or polyamide, blends of polymers on the basis of, for instance, nitrocellulose, polystyrol or polyvinylchloride, polyvinylacetate copolymers with polyethylene or polyamides.

It is also possible to use long-chained and branched polymers such as polyvinylesters with long-chained alcohols in the side-chain. Chromium stearate which is known under the trademark "Quilum C" can be used for this purpose, too. Cross-linked polyorganosiloxanes or their blends, or copolymers with, for instance, polyvinylether and/or maleic anhydrides may be used as surface tension modifying agents, too. These silicon-containing release layers can be achieved by coating a substrate with polyorganosiloxanes. These polyorganosiloxanes can be dissolved in an organic solvent or can be a water-based emulsion or can be coated as a solid. After coating, the polyorganosiloxanes are cured with methods known to the prior art. This can be a thermal curing catalyzed by condensation catalysts, e.g. organo tin salts, or an additional crosslinking via a hydrosilylation reaction catalyzed by sub-group transition metal compounds.

It is also possible to cure the polyorganosiloxanes via UV-radiation or electron-beam curing (EBC) including initiators.

The substrate that is the carrier for at least one antenna coil and a circuit chip in electrical connection thereto can be a polymeric film such as a film that is a PVC film, a polyethylene film, a polypropylene film, or a polyester film such as a polyethylene terephthalate film. It is also possible to use a non-woven material such as a valve prepared from fibers of natural or artificial origin. Another embodiment of the substrate is paper or board. The grammage of the paper or board can differ from 20 to 400 g/m², preferably 30 to 270 g/m², and most preferably 40 to 220 g/m². The fibers used for preparing the paper or board may be of natural or artificial origin.

The circuit chip and at least one antenna coil are preferably positioned on the same surface of the substrate. However, it is also possible to arrange at least one antenna coil on the reverse surface of the substrate.

In one embodiment of the RFID transponder, a cover layer is deposited on one or both surfaces of the substrate. It is preferred that the cover layer is deposited on the reverse side of the substrate surface with the disclosed range of surface tension to cover at least one antenna coil and the circuit chip. In one special embodiment, both sides of the RFID transponder may have a cover layer deposited on the substrate with a surface tension conforming to the teaching of this invention. In order to obtain the necessary surface tension disclosed in the present invention, the surface of the cover layer on the reverse side of the substrate carrying the RFID transponder may optionally be coated with surface tension modifying agents. These surface tension modifying agents are similar to those mentioned above.

The invention is further illustrated by the following examples, without being limited to them.

### Examples

### Example 1

A transponder composed of an 45 x 45 mm² etched aluminum antenne on a 75 µm polyester film and a chip mounted onto, is coated with a release lacquer on the antenna side. The transponders are singulated and collected in a stacker. The surface tension of the coated side is about 35 mN m.
A 100 g/m² paper is partially coated with an adhesive (peel adhesion according to FTM 1 > 15 N/25 mm) and covered by a release liner. Tags with a size of 60 x 100 mm² are punched out of this paper.
The tags are used for marking incoming goods in a warehouse. After fixing the tags to a merchandise, the liner of said tags is removed and the transponders were stuck with the side that is coated with the release lacquer onto the tags. After usage the transponder can be removed from the tag without any loss of function. The transponder can be reused again.

### Example 2

Antennas of 100 x 100 mm² are printed via screen printing and integrated circuits are assembled for manufacturing RFID transponders onto the side of a 190 g/m² glassine liner that is reverse to the release layer of said glassine paper. Said RFID transponders are singulated and collected in a stacker. The surface tension of the release agent coated side is about 32 mN m.
Labels of the dimension 90 x 150 mm² are individually printed via a digital press and subsequent die cut out of a standard 80 g/m² paper. Said label material is coated with a permanent adhesive (peel adhesion acc. to FTM 1 > 15 N/25 mm) and the adhesive is covered by a liner.
For marking goods the liner is removed and the adhesive is partially covered with the RFID transponder. Therefore the RFID transponder is stuck onto the label with the siliconized side. This combination can be fixed onto goods with the remaining uncovered adhesive area of the label.
If the RFID transponder is no longer needed the transponder is removed and can be used again. The label remains on the goods.

### Example 3

An antenna with the dimensions 90 x 140 mm² is printed via screen printing on a 250 µm PVC film. A chip is assembled to the antenna. A second PVC film is laminated on top of the antenna. Tickets of 100 x 150 mm² are punched out. The surface tension of the PVC surface is about 37 mN m.
A consecutively printed standard self-adhesive label material is partially covered with a second adhesive (peel adhesion according to FTM 1 < 7 N/25 mm) on top and said adhesive is covered with a 54 µm glassine liner. Labels of 150 x 150 mm² are punched.
The labels are used for marking one-way containers. The label is fixed onto the container after removing the first liner. Afterwards the second liner on top is removed and the ticket comprising the RFID transponder is fixed onto the label. The RFID transponder is programmed simultaneously with the filling of the container. Due to the suitable combination of adhesive performance of the adhesive on top of the label and the surface tension of the ticket, the ticket can be removed after usage without any loss of function.

### Example 4

An active transponder for temperature recording is laminated between two synthetic papers. The outer surface of one of these papers is coated with a release lacquer. Tags of 54 x 86 mm² are punched. The surface tension of said transponder is about 35 mN m. The transponder is used for controlling the cooling chain of frozen goods during shipment. The tags are fixed with an additional label as described in ex. 3. The labels can be printed individually before usage via a standard printer. After shipment the tag can be removed without any loss of function and the stored data can be analyzed. Afterwards the tag is reused again.

### Example 5

A transponder of 75 x 135 mm² is laminated between a 50 µm white PET standard label film and a transparent 75 µm PET label film. The outer side of the transparent 75 µm PET label film is coated with a release agent. The surface tension of said coating is about 42 mN m. Out of this composite material tags are punched measuring 80 x 145 mm². An 80 g/m² standard label paper is printed via UV flexo-printing and is partially coated with an adhesive and the adhesive is backed by a siliconized paper. The peel adhesion of the adhesive coating is according to FTM 1 < 5 N/25mm.
Sheets of the size DIN A4 are punched out. The sheets are clamped between two reams of paper on a pallet, with the adhesive coating being out of the reams, in order to mark the pallet. The liner of said sheets is removed and the tag is stuck, with the side of the inventive surface tension, onto said sheet. When the pallets have reached their final destination, the transponder is peeled off without any loss of function. The transponder may be reused.

## Claims

1. RFID transponders, having a substrate as carrier for at least one antenna coil and a circuit chip in electrical connection thereto, **characterized in that** the surface tension of at least one surface of the substrate ranges from 15 to 50 mN m.

2. RFID transponders according to claim 1, **characterized in that** the surface tension of at least one surface of the substrate is obtained by a coat with a surface tension modifying agent.

3. RFID transponders according to one of the preceding claims, **characterized in that** the surface tension of at least one surface of the substrate ranges from 15 to 40 mN m.

4. RFID transponders according to one of the preceding claims, **characterized in that** a cover layer is deposited on one or both surfaces of the substrate.

5. RFID transponders according to one of the preceding claims, **characterized in that** the substrate and/or the cover layer is selected from polymeric films, woven materials, non-woven materials, paper and board and mixtures thereof.

6. RFID transponders according to one of the preceding claims, **characterized in that** the modifying agent is a release agent selected from polymers, waxes, chromium stearate, polysiloxanes and derivatives of polysiloxanes and mixtures thereof.

7. Use of the RFID transponders according to one of the preceding claims, as security means by sticking the RFID transponder onto a surface that is coated with an adhesive.

8. Use of the RFID transponders according to claim 7, **characterized in that** the surface is a label, tag, transfer adhesive tape or double sided adhesive tape.

9. Use of the RFID transponders according to claim 7 or 8, **characterized in that** the RFID transponder is detachable from the surface without any loss of function.
